# EUROPEAN PATENT SPECIFICATION

(11) **EP 2 689 587 B1**
(45) Date of publication and mention of the grant of the patent: **04.11.2020**
(21) Application number: 12710282.0
(22) Date of filing: 23.03.2012
(51) Int. Cl.: G06F 3/0481, G06T 19/00, H04N 13/183, H04N 13/128

(54) **DEVICE AND PROCESS FOR DEFINING A REPRESENTATION OF DIGITAL OBJECTS IN A THREE-DIMENSIONAL VISUAL SPACE**
VORRICHTUNG UND VERFAHREN ZUR BESTIMMUNG EINER DARSTELLUNG VON DIGITALEN OBJEKTEN IN EINEM DREIDIMENSIONALEN VISUELLEN RAUM
DISPOSITIF ET PROCÉDÉ POUR LA DÉFINITION D'UNE REPRÉSENTATION D'OBJECTS DIGITAUX DANS UN ESPACE VISUEL TRIDIMENSIONNEL

(30) Priority: 25.03.2011 DE 102011015136
(43) Date of publication of application: 29.01.2014
(73) Proprietor: Institut für Rundfunktechnik GmbH, 80939 München (DE)
(72) Inventor: GÜLBAHAR, Mark, 84036 Landshut (DE)
(74) Representative: Koplin, Moritz
(86) International application number: PCT/EP2012/055257
(87) International publication number: WO 2012/130774

(56) References cited:
- EP-A1- 2 278 824
- EP-A2- 2 284 697
- US-A1- 2011 013 888
- US-A1- 2011 063 415

## Description

The present invention relates to a device and process for defining a representation of digital objects in a three-dimensional visual space. Moreover, the invention relates to an appropriate computer program. Representation of digital objects in a three-dimensional visual space provides a higher degree of freedom in relation to positioning and/or orientation than any common two- dimensional representation. For example, digital objects may be represented on different depth planes, e. g. in a frontoparallel manner, i.e. on a depth plane or in an in-depth alignment, as viewed by a user or viewer, respectively. Appropriate representation of a wide variety of typically different digital objects simultaneously in the three-dimensional visual space is highly desirable for the user. It will for example usually be desirable that digital objects will unequivocally be arranged in the three-dimensional visual space, and in case that representation will include interactive digital objects the latter should be easy to access and easy to handle.

US 2011/0013888 A1 discloses an information recording medium and playback device for playing back 3D images. For better readability of the subtitles a video shift mode is provided during playback of the stereoscopic image, e.g. a 3D video stream. In addition, while streaming stereoscopic video streams from 3D media a pop-up menu can be activated which leads to a 1 plane+zero offset mode. A picture-in-picture mode, however, cannot be used during playback in 3D output mode. The video shift mode indicated "Up" or "Down" and the shift amount of the video plane may be fixed to the size of each of the black frames provided in the upper and lower sides of the plane. Besides the stereoscopic video all contents are shown in plane and a shifting function is provided. In addition, some functions like the picture-in-picture mode are disabled during 3D playback.

EP 2 278 824 A1 discloses a video processing apparatus and video processing method. The video processing apparatus comprises an image processor which includes a 3D image output section for outputting a 3D image with parallax between a left-eye image and a right-eye image. An average parallax calculator calculates an average screen parallax. The average parallax is corrected and synthesized depending on the type of 3D image. The corrected average screen parallax level is added as parallax to a caption or OSD. Moreover, EP 2 278 824 A1 discloses adjusting alpha blending which might be weighted as second weight in addition to a first weight which is based on the type of content shown on the screen. A multiplier multiplies both weights and calculates a parallax adjustment value. The alpha blending value represents the transmittance of displayed information, e.g., an OSD.

It is thus an object of the present invention to provide a device and a process for defining digital objects in a three-dimensional visual space enabling a representation of digital objects which is favorable for the user. It is also an object of the present invention to provide a device and a process for defining digital objects relating to OSD (On Screen Display) parameters of a display unit for supporting OSD regulations of a displayed parameter.

According to a first aspect of the present invention a process for arranging a digital object that is part of an On Screen Display, OSD, visualization, in a three dimensional visual space is defined by the appended claim 1.

According to a another aspect of the present invention an electronic entertainment device with a display unit for presenting digital objects is defined by the appended claims 2-9.

Due to the fact that the provided digital objects are classified into one of several object classes and the representation specifications, i.e. specifications defining how digital objects which are being provided are to be represented in the three-dimensional visual space depend on the associated object class specifications - and thus depend on the respective object classes - characteristic features of different digital objects, such as the type thereof or the degree of interactivity thereof (see below), may be taken into account during specification of the representation by way of appropriate classification, thus allowing representation of digital objects which is favorable for the user, as a function of these features.

"Digital objects" are for example video and audio data or data streams, stills, textual content, animations, avatars, interactive control panels, electronic program guides, applications, signers, or ancillary information, such as for example video text or subtitles.

By "three-dimensional visual space" a spatial, visual and/or acoustic representation should be understood, such as it may for example be generated by way of stereoscopy, holography, or by way of the so called "spatial audio". This shall be briefly explained below.

Stereoscopy which has been known since the beginning of the 19th century is based on the fact that man has two eyes which are spaced apart from each other enabling viewing his environment from two different viewing angles. It is the brain which is able to create spatial impression of depth from the relative differences between the images perceived by both eyes. It is stereoscopy which simulates this natural stereoscopic way of vision by offering two two-dimensional images, i.e. monoscopic images, to the viewer, one for the right eye and one for the left eye, showing the represented scenery from two slightly different perspectives. Depending on the relative differences between both two-dimensional images which are presented, the so called disparities, the viewer will perceive objects which are present in the scenery in a stereoscopic way of vision. For the reproduction of stereoscopic image data the two images have to be separated from each other such that only the appropriately associated image will be provided to the respective eye of the viewer. This may be accomplished by the so called stereoscopic display devices, which depending on the type may for example be based on a local, temporal or polarizational multiplexing process.

The expression "holography" includes processes making use of the wave-like character of the light in order to generate spatial visual representations. For this the light scattered by an object will be recorded and may subsequently be reproduced. The reproduction will then display the article having three dimensions, such that the image perceived by the viewer will simultaneously change as the article is viewed from different positions or visual perspectives. For the reproduction of holographic records or artificial holographic volume data which for example are generated from three-dimensional graphic models, so called volume display devices are useful.

By "spatial audio" spatial acoustic representation by way of two or more loudspeakers is understood. Modern systems which for example are based on the principle of wave field synthesis and generally comprise a plurality of speakers are able to arrange sources of sound waves in the space in a three-dimensional manner.

The representation specifications provided by the representation specifications providing unit may be formulated in the form of a regulation describing the designated representation of the provided digital objects depending on the associated object class specifications in the three-dimensional visual space. For example the representation specifications may specify that digital objects which are classified into a specific object class are to be represented in the three-dimensional visual space in a central and frontoparallel manner, i.e. on an in-depth plane, as viewed from a viewer or user respectively, whereas digital objects which are classified into any different object class are to be represented on the periphery of the tree-dimensional visual space and in an in-depth alignment.

It is preferred that the object providing unit is adapted for classifying a digital object into one of said several object classes and generating the associated object class specification.

It is furthermore preferred that classification of a digital object is based on at least one object classification criteria selected from the group consisting of type, degree of interactivity, quality and content of the digital object, for example still pictures, text, audio, video, EPG, and so on.

The "type" of a digital object is for example a video or audio data or data stream, still, textual content, application, etc.

The "degree of interactivity" of a digital object herein represents a measure of how intensive a user typically interacts with the digital object. For example a video or audio data or data stream will only be reproduced, and thus will rather passively be consumed, such a digital object thus may have a lower degree of interactivity than for example an application for word processing or OSD commands.

By "quality" of a digital object parameters should be understood, such as for example resolution or compression factor of a video data or data stream or number of channels of an audio data or data stream.

The "content" of a digital object specifies for example the genre of a film which is present in the form of a video data or data stream or a text or the style of a piece of music which is present in the form of an audio data or data stream
One object of the present invention is an OSD visualization system representing commands for regulating or indicating the working conditions of an electronic entertainment apparatus, (e.g. a television set, set top box, digital media player or video recorder) like audio and picture reproduction conditions (volume, luminance contrast, and so on), the appearances of an EPG (Electronic Program Guide) and other overlays or graphical objects that the apparatus can show on the screen in an OSD visualization. Such graphical representations have been in the past usually fixedly established at the manufacturer's site and cannot be altered by the user interactively by redetermining their graphical characteristics like position in space, color, texture, size, aspect ratio, and so on. Additionally, according to the prior art the graphical representations of the OSD regulations are not structured as a set of one or more objects that can be individually redefined interactively by the final user of the apparatus, by changing some of their graphical properties established depending on their classification and more generally the property of the object.

The object classification criteria mentioned above specify characteristic features or properties of typical digital objects which are significant for a representation of digital objects which are advantageous for the user. It may for example be reasonable to represent a digital object having comparably low quality, for example an audio data or data stream encoded with a very high compression factor, in the three-dimensional space closer to the user than a respective digital object having higher quality. It may furthermore be reasonable to represent digital objects having a high degree of interactivity in the three-dimensional visual space in a centered and frontoparallel manner, i.e. on an in-depth plane, as viewed from the user or the viewer, respectively, in order to be easy to reach and easy to handle.

Preferably classification of so far unknown digital objects may be performed depending on their similarity to digital objects which are already known. For this, characteristic features of a still unknown digital object may for example be compared to those of digital objects which are already known, and in case that a similar or the most similar digital object which is already known has been identified, the unknown digital object may be classified into the same object class.

It is preferred that the device furthermore comprises a representation context providing unit for providing a current representation context, the representation context providing unit being adapted for adapting the representation specifications to the current representation context which is being provided.

It is furthermore preferred that the current representation context comprises at least one context selected from the group consisting of the current environment of the user, current frame of mind of the user, current context of the user and current time of day.

In case of the representation of digital objects to OSD visualizations in an electronic entertainment apparatus, i.e. a stereoscopic display device (80), it is preferred that the current representation context comprises at least the current environment of the digital objects represented on the display, like the visual content being reproduced during the OSD visualization. As an example the visual content currently shown on the display device could be represented in 2D or 3D mode and the OSD visualization could be automatically represented in a certain mode (2D or 3D) depending on representation mode of the visual content and/or the properties of the digital objects (2) part of the OSD visualization (e.g. their type or quality) can vary according to rules set by the user and/or the manufacturer of the electronic entertainment apparatus.

The "current environment" of the user may for example be a room, e.g. his living or sleeping room, his kitchen or a hotel room. This representation context could for example also specify that the user is exterior of an enclosed room in the outdoors, that he is travelling by train or by plane, that he stays with friends or that his environment is bright or dark.

By "current frame of mind" of the user subjective feelings of the user, such as joy, grief, fatigue, tiredness, serenity, boredom, interestness etc. shall be understood.

In case of the representation of digital objects to OSD visualizations in an electronic entertainment apparatus, the "current environment" of the apparatus may for example be a room, e.g. his living or sleeping room, his kitchen or a hotel room which can be characterized by different lighting conditions. so that its environment is bright or dark. The apparatus can lay in portrait or landscape position, so that the environment of the apparatus can assume different sizes and aspect ratio, and so on.

The "current context" of the user may for example comprise specification whether the user is sitting, lying or standing, whether he uses the telephone or whether he is using another technical device, e.g. a notebook.

The "current context" of the OSD representation in an electronic entertainment apparatus may for example comprise specification whether the apparatus is reproducing a still picture, a tv content, an EPG guide, at a low or high volume level, if parental control is active, and any other working conditions of the electronic entertainment apparatus.

The representation contexts mentioned above essentially specify external features which may influence the representation of the digital objects which is advantageous for the user. It may thus for example be reasonable to provide a representation of the digital objects in an enclosed darkened room that is different from that in the outdoors under bright sunlight.

In case of digital objects pertaining to an OSD visualization an ambience lighting sensor can be associated with the display unit of the entertainment apparatus for detecting the light conditions of the room and automatically change the luminance of the OSD visualizations depending on the detected lighting conditions.

It is preferred that the device furthermore comprises a representation preferences providing unit for providing representation preferences of a user wherein the representation specifications providing unit is adapted for adapting the representation specifications to the provided representation preferences of the user.

Representational preferences of users, i.e. the mode of representation of digital objects in the three-dimensional visual space which is preferred by them may differ from the representation specifications as set forth by default in the representation specification providing unit. Due to the fact that the representation specifications providing unit preferably seeks to adapt the representation specifications, i.e. the regulations specifying the representation of the provided digital objects, depending on the associated object class specifications in the three-dimensional visual space, to the representation preferences of the users, adaption of the representation to specific wishes and ideas of one or more users will be enabled.

The representation specifications which accordingly were adapted will then specify how digital objects which are being provided are to be represented in the three-dimensional visual space, depending on the associated object class specifications, according to the representation preferences of the user.

Preferably the representation preferences of the user may be saved by the representation preference providing unit, for example in the form of user profiles.

It is furthermore preferred that the device furthermore comprises a user input unit for the input of user information by the user, the representation preferences providing unit being adapted for specifying the representation preferences of the user depending on the input which is made by the user.

A possible digital object being part of an OSD visualization according to the invention can be for example a bi- or three-dimensional graduated bar indicating the volume level of the electronic entertainment apparatus and a graduated graphical object associated to the bar indicating how much the volume can still be increased to arrive to the maximum level. By acting on the volume regulation key the user can adjust the volume level of the sound reproduction of the apparatus and the correspondent digital object associated to such regulation is visualized accordingly. i.e. by changing the length of the bar. According to the invention the bar can be shown by default in the OSD visualization in a certain position (i.e. in the lower centered part of the display, in the zero depth plane), in a certain layout (i.e. horizontally), with a certain appearance (i.e. as a flat bi-dimensional object positioned fronto-parallely to the viewer in form of a rectangle), color (i.e. green), texture, (i.e. no texture), without shadows (i.e. possible presence of shadows according to certain virtual lighting conditions), and so on. This default settings of the properties of the digital object "volume bar" may be determined at the manufacturer's site.

If the manufacturers allowed it in defining the volume bar as a digital object interactively redefinable by the end user of the apparatus, according to the invention such user can redetermine the appearance of the volume bar by changing its relative positioning on the display screen in a three dimensional sense, i.e. in terms of horizontal, vertical and depth coordinates, the layout (e.g. from horizontal to vertical), its appearance (i.e. from a flat rectangle to a three dimensional solid parallelepiped, which visible faces can possibly be changed by rotating the solid parallelepiped around its geometric barycenter), the color, the texture, active the presence of shadows by defining certain virtual lighting conditions of the digital object, and so on. Of course also the graduated object associated to the bar can be edited in its graphical properties in a similar manner. The particular properties and the ways in which such graphical properties can be varied by the user can be defined by the manufacturer of the apparatus who can define limits and conditions under which any change of the digital object is allowed, If the changes are saved at the end of the editing phase the volume bar and the associated graduated object will be visualized on the display in the graphical manner lastly redefined by the user according to his or her preferences.

A similar mechanism can be implemented to other digital objects comprised in an OSD visualization associated to the working conditions of the apparatus like those associated to the regulations of the picture parameters (e.g. luminance, contrast, 2D/3D mode, disparity), to the sound parameters (e.g. left-right balance, frequency equalization), to the tuning parameters (auto or manual tuning search, tuning frequency channel) in case of a tv receiver, and so on.

The same concept can be applied to digital objects being part of an OSD visualization confirming a change in the working conditions of the apparatus in reaction to a command imparted by the user. This can be applied, for example, to the graphical object shown as a confirmation that the apparatus has switched to a silenced working status ("mute"), in which the sound reproduction is deactivated, or the graphical representation of the station name and/or program number shortly shown when a change in the tv program currently selected takes place or to the content title and/or description shown on the display when the reproduction of a digital content (e.g. a media file or an audiovisual stream stored on a digital storage disc) begins.

As a user input unit for example a mouse, a keyboard, a touch screen, a push-button, a remote control unit or another suitable input means may be used.

It is preferred that user input may comprise representation modifications and/or representation evaluations, the representation preferences providing unit being adapted for specifying the representation preferences of the user depending on the representation modifications and/or representation evaluations made by the user.

If a user modifies and/or evaluates representation of digital objects in the three-dimensional visual space, which is being presented to him via the user input unit, he will supply an "implicit feedback" or an "explicit feedback", i.e. information of how he will perceive the representation which is presented to him, to the representation preference providing unit. The representation preferences providing unit may make use of this information to specify representation preferences of the user, i.e. his wishes and ideas concerning the representation which is preferred by him.

It is furthermore preferred that the representation preferences providing unit is adapted to provide representation preferences of the user concerning multiple representation contexts and to provide the ones among the respective representation preferences of the user which correspond to the current representation context.

The representation specifications which are adapted to the representation preferences of the user by the representation specifications providing unit will then specify how digital objects which are provided are to be represented in the three-dimensional visual space, depending on the associated object class specifications, according to the representation preferences of the user in the current representation context, e.g. in the current environment of the user or the electronic entertainment apparatus, as the case may be.

It is preferred that the representation preferences providing unit is adapted for providing representation references of several users, the representation specifications providing unit being adapted to adapt representation specifications to the supplied representation preferences of said several users, the adaption being made depending on consistencies or similarities of the supplied representation preferences of said several users.

This means for example that the representation specifications providing unit may be adapted to establish an intersection of the representation preferences of said several users. For example all of said several users which are simultaneously using the device might prefer that digital objects which are classified into a specific object class are to be represented in a centered and frontoparallel way in the three-dimensional visual space, i.e. in an in-depth plane, as viewed from their point of view. This would accordingly be taken into account during adaption of the representation specifications by the representation specification providing unit.

If the device is used by several users whose current positions in relation to the device are known - e.g. as they are detected by appropriate sensors, e.g. visual and/or acoustic sensors - the representation specifications may additionally or alternatively be "optimized" for said several users e.g. by representing the digital objects such that they may very easily be identified by all users or solely by specific users. It thereby may for example be possible to represent digital objects such that they are as optimal as possible for the respective user to whom they may concern. For example a pop up text window initiated by a user who is placed on the left side of the device could be represented on the right side and in an in-depth alignment as the window has mainly to be visible for said user. An interactive control panel or an application could for example be represented such that the user who just is disposing of an appropriate input device (e.g. a remote control) may be able to view and operate it in the best mode of operation.

It is furthermore preferred that the representation preferences providing unit is adapted for enabling users to supply their representation preferences to other users.

Thus user may for example swap their representation preferences among them.

It is preferred that the device furthermore comprises a representation generation unit for generation of a representation of the supplied digital objects in the three-dimensional visual space according to the associated object class specifications and the provided representation specifications.

It is furthermore preferred that the representation generation unit is adapted for at least generating a representation which is selected from the group consisting of stereoscopic representation, holographic representation and spatial audio representation of the provided digital objects.

According to another aspect of the present invention a process for defining a representation of digital objects in a three-dimensional visual space will be provided, the process comprising the following steps:
- providing digital objects and associated object class specifications, wherein a provided digital object is classified into one of several object classes and the associated object class specification defines the object class;
- providing representation specifications defining how provided digital objects are to be represented in the three-dimensional visual space depending on the associated object class specifications.

According to further aspect of the present invention a process for defining a representation of digital objects in a three-dimensional visual space will be provided, the process comprising the following steps:
- providing digital objects and associated object class specifications, wherein a provided digital object is classified into one of several object classes and the associated object class specification defines the object class;
- providing representation specifications defining how provided digital objects are to be represented in the three-dimensional visual space depending on the associated object class specifications;
wherein said digital objects (2) are part of an On Screen Display visualization of an electronic entertainment apparatus, said digital objects (2) being associated to the working conditions of said electronic apparatus and/or their regulations.

According to another aspect of the present invention a computer program for defining a representation of digital objects in a three-dimensional visual space is provided, the computer program having program code means causing the device according to any claim to perform the steps of the process if the computer program will be run on a computer which controls the device.

It has to be noted that the device for the specification of a representation of digital objects in a three-dimensional visual space according to the independent claims, the respective process and the respective computer program may have similar and/or identical preferred embodiments, especially as defined in the dependent claims.

It has to be noted that a preferred embodiment of the invention may also be any combination of the dependent claims with the respective independent claim.

In the following, embodiments of the invention will be disclosed while reference will be made to the accompanying figures wherein
- Fig. 1: schematically and by way of example shows a first representation of digital objects in a three-dimensional visual space,
- Fig. 2: schematically and by way of example shows an embodiment of a device for the specification of a representation of digital objects in a three-dimensional visual space,
- Fig. 3: schematically and by way of example shows a second representation of digital objects in a three-dimensional visual space, and
- Fig. 4: schematically shows a flow diagram of an embodiment of a process for the specification of a representation of digital objects in a three-dimensional visual space.

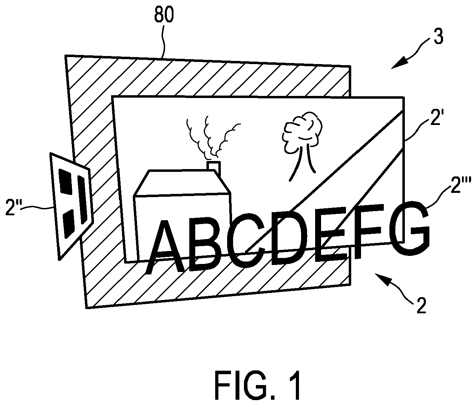

Figure 1 schematically and by way of example shows a first representation of digital objects 2 in a three-dimensional visual space 3. The representation in this example is a stereoscopic representation, i.e. a spatial representation which is based on the fact that two two-dimensional, i.e. monoscopic images, one for the right eye and one for the left eye, showing the represented scenery from two slightly different perspectives will be presented to the viewer. The stereoscopic representation will be displayed by way of an appropriate display device 80, herein a stereoscopic display device, such as for example an autostereoscopic display device.

The first representation comprises three digital objects 2, each of them being represented in a different way in the three-dimensional visual space 3. The first digital object 2 is a video data stream 2', which is represented in the three-dimensional visual space 3 in a centered and frontoparallel manner, i.e. as viewed by a user or viewer, respectively, who is placed in front of the display device 80, on an in-depth plane at a medium depth. The second digital object 2 is an interactive control panel 2" which is represented on the left periphery of the tree-dimensional visual space 3 and in an in-depth alignment. The third digital object 2 is an ancillary information concerning the video data stream 2', herein a subtitle 2"'. The latter is also represented in a frontoparallel manner, but on the lower edge of the three-dimensional visual space 3 and at a lower depth, as viewed by the user or viewer, respectively. In this positioning the characters of the subtitle 2'" overlap at least partially the lower edge of the video data stream 2'.

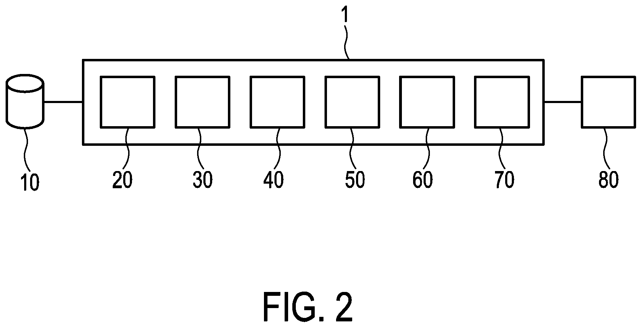

Figure 2 schematically and by way of example shows an embodiment of a device 1 for defining a representation of digital objects 2 in a three-dimensional visual space 3. The device 1 comprises an object providing unit 20, a representation specifications providing unit 30 and a representation generation unit 70.

Digital objects 2, e.g. video and audio data streams, stills, textual content, interactive control panels, subtitles etc. are stored in a memory 10. Memory 10 in this case is an external memory; however it also may be included in the device 1, e.g. may be part of the object providing unit 20.

A digital object 2 which is to be represented will be provided in the object providing unit 20 in memory 10, the object providing unit being adapted for classifying the digital object 2 into one of several object classes and generating an associated object class specification, the associated object class specification defining the object class. Classification by the object providing unit 20 is based on at least one object classification criteria, which herein in this embodiment is the type of the digital object 2. However, in other embodiments classification may additionally or alternatively also be based on other object classification criteria, such as for example degree of interactivity, quality, and/or content of the digital object 2. In classification decision will for example be made by way of file extension of the digital object 2 which is to be represented and which is provided in memory 10, which object class the digital object 2 will be assigned to. Thus digital objects 2 having for example the file extension "*.avi", "*.mov", "*.mp4, "*.mpg", etc. will be classified into an object class comprising video data streams. Accordingly digital objects 2 having the file extension *.aac", "*.aif", "*.m4a", "*.mp3", etc. are being classified into another object class comprising audio data streams. Digital objects 2 having the file extension "*.sub", "*.srt", etc. are in turn being classified into a further object class comprising subtitles. The classification is in this case preferably based on one or more tables wherein previously known file extensions and the respective object classes or object class specifications are stored.

The classified digital object 2 will be co-provided with the associated object class specification by the object providing unit 20.

The representation specifications providing unit 30 provides representation specifications defining how digital objects 2 which are provided are to be represented in the three-dimensional visual space 3, depending on the associated object class specifications. The representation specifications may be understood as regulations defining the intended representation of the digital objects 2 depending on the associated object class specifications, in the three-dimensional visual space 3. In this embodiment these regulations will specify by default that a digital object 2 which is classified into an object class comprising video data streams, as shown in figure 1, is to be represented in the three-dimensional visual space 3 in a centered and frontoparallel manner at a medium depth, while a digital object 2 which is classified into an object class comprising interactive control panels, as shown in figure 1, is to be represented on the left periphery of the three-dimensional visual space 3 and in an in-depth alignment, and a digital object 2 which is classified in an object class comprising subtitles, as shown in figure 1, is in turn to be represented in a frontoparallel manner, but on the lower edge of the three-dimensional visual spaces 3 and at a lower depth, as viewed from the user or the viewer, respectively. In other embodiments the "default" representation specifications may also define other positionings and/or orientations of the digital objects 2. It is to be understood that the representation specifications may furthermore also comprise details concerning digital objects 2 which are classified into object classes which are different from the previously mentioned object classes.

The representation generation unit 70 will then generate a representation of the digital object 2 which is being provided, in the three-dimensional visual space 3, according to the associated object class specification and the provided representation specifications. In this embodiment the representation generation unit 70 is adapted for generating a stereoscopic representation of the digital object 2, as show in figure 1. In other embodiments the representation generation unit 70 may even be adapted, in addition to or alternatively to other representations, for generating e.g. a holographic representation or a spatial audio representation of the digital object 2.

In this embodiment generation of the representation of the provided digital object 2 in the three-dimensional visual space 3 by way of the representation generation unit 70 only comprises generation of an appropriate display signal, in this case a stereoscopic display signal, i.e. a display signal comprising two two-dimensional, i.e. monoscopic images, one for the right eye and one for the left eye. In this embodiment the generated stereoscopic display signal may be supplied to an external display device 80, herein a stereoscopic display device, such as for example an autostereoscopic display, for spatial display. In other embodiments the display device 80 however may be included in the device 1, e.g. may be part of the representation generation unit 70.

In order to allow adaption of representation to a current representation context device 1 furthermore comprises a representation context providing unit 40.

The representation context providing unit 40 is adapted for providing a current representation context. In this embodiment the current representation context comprises the current environment of the user. However, in other embodiments the current representation context may additionally or alternatively also comprise other contexts, such as for example the current frame of mind of the user, the current context of the user and/or the current day time. The current representation context may for example be inputted into the representation context providing unit 40 by the user himself, e.g. via a mouse, a key board, a touch screen, a push-button, or another appropriate input means. Additionally or alternatively the representation context providing unit 40 may also comprise suitable sensors, e.g. visual and/or acoustic sensors which are able to gather the current representation context. Thus, information concerning the environment of the user may for example be gathered by way of a camera, such as the fact whether he is present in a room or outdoors, whereas by way of a microphone information concerning the environmental loudness may be obtained, among others. Briefly, if the current representation context comprises the current day time, it may be sufficient for the representation context providing unit 40 to include a suitable timer e.g. a clock.

The representation specifications providing unit 30 is adapted for adapting the representation specifications to the current representation context which is being provided. The thus adapted representation specifications will then specify how digital objects 2 which are being provided are to be represented in the three-dimensional visual space 3 depending on the associated object class specifications according to the current representation context. For example if it will result from the current representation context which is being provided that the user is currently present in a loud environment the representation specifications may be adapted such that they will specify that audio data streams in the three-dimensional visual space 3 are to represented louder and/or closer to the user.

In order to furthermore allow adaption of the representation to the wishes and ideas of one or several users the device 1 additionally comprises a representation preferences providing unit 50 and a user input unit 60.

The user input unit 60 enables the user to input user input data wherein the representation preferences providing unit 50 is adapted for defining representation preferences of the user depending on his user input data. In this embodiment the user input data may include representation modifications and/or representation evaluations, wherein the representation preferences providing unit 50 is adapted for defining the representation preferences of the user depending on the representation modifications and/or representation evaluations which were inputted by him. For example the user may modify the default representation shown in figure 1 via the user input unit 60 e.g. by displacing or rotating the provided digital objects 2 according to his own wishes and ideas. The representation preferences providing unit 50 monitors the representation modifications performed by the user on the default representation and defines the representation preferences of the user on the basis of this "implicit feedback ". Alternatively the user may also evaluate a representation via the user input unit 60, thus for example may specify how much he likes or dislikes the default representation of a specific digital object 2. The representation preferences providing unit 50 may also specify the representation preferences of the user on the basis of this "explicit feedback ". It is understood that it furthermore is also possible to specify the representation preferences of the user on the basis of a combination of "implicit feedback" and "explicit feedback".

The representation preferences providing unit 50 is furthermore adapted for providing the representation preferences of a user. The representation specifications providing unit 30 is adapted for adapting the representation specifications to the provided representation preferences of the user. The representation specifications which are now accordingly adapted will then specify how digital objects 2 which are being provided are to be represented in the three-dimensional visual space 3, depending on the associated object class specifications according to the representation preferences of the user.

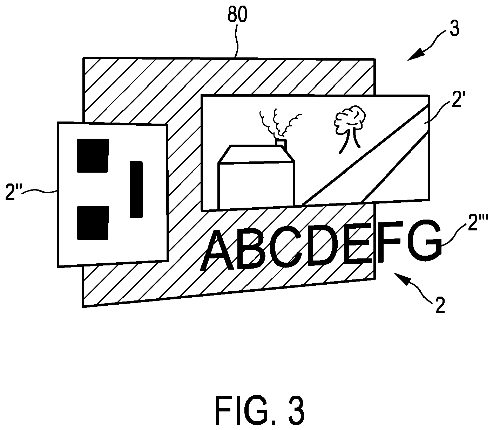

Figure 3 schematically and by way of example shows a second representation of digital objects 2 in a three-dimensional visual space 3. This second representation exemplifies how the representation which is preferred by the user might differ from the first representation shown in figure 1. Again the second representation includes the same three digital objects 2 as the representation shown in figure 1. The first digital object 2, i.e. the video data stream 2', in turn is represented in the three-dimensional visual space 3 in a frontoparallel manner, i.e. in an in-depth plane, at medium depth, as viewed from a user or the viewer, respectively, who is placed in front of the display device 80. However, herein the video data stream 2' is not centered, but is slightly offset towards the right upper edge of the three-dimensional visual space 3 and, compared to the first representation shown in figure 1, is represented in a slightly reduced size. The second digital object 2, i.e. the interactive control panel 2", is represented at the left edge of the three-dimensional visual space 3, as it is shown in the first representation of figure 1, however not in an in-depth alignment but is rather represented in a frontoparallel manner as well and slightly enlarged. It thus may occasionally be easier to handle for the user. The third digital object 2, i.e. the subtitle 2'" in turn is represented in a frontoparallel manner but is represented below the video data stream 2' and is represented at the same in-depth plane as is the latter. This positioning is favorable in that the characters of the subtitle 2'" do not overlap the video data stream 2'.

In this embodiment the representation preferences providing unit 50 is furthermore adapted for supplying representation preferences of the user for various representation contexts and for supplying those representation preferences of the user which match the current representation context. The representation specifications which were thus adapted to the supplied representation preferences of the user by the representation specifications providing unit 30 then will specify how the supplied digital objects 2 are to be represented in the three-dimensional visual space 3 according to the representation preferences of the user in the current representation context, depending on the associated object class specifications.

In this embodiment the representation preferences providing unit 50 is furthermore adapted for providing for the representation preferences of several users and moreover the representation specifications providing unit 30 is adapted for adapting the representation specifications to the provided representation preferences of said several users. Adaption is performed depending on the consistencies or similarities of the provided representation preferences of said several users.

Finally the representation preferences providing unit 50 in this embodiment is adapted for enabling users to make their representation preferences available to other users. This for example may be performed by the user by reading out his representation preferences from the representation preferences providing unit 50 via an appropriate interface, e.g. a wireless or wire-bound communication system or a mobile storage media, such as a memory stick or a mobile hard disc and reading in extraneous representation preferences into the representation preferences providing unit 50. It is preferred that the representation preferences will be represented in a text-based description language, such as e.g. XML ("Extensible Markup Language"). The proprietary and/or extraneous representation preferences of a user may be stored/are being stored in the representation preferences providing unit 50 for example in the form of user profiles.

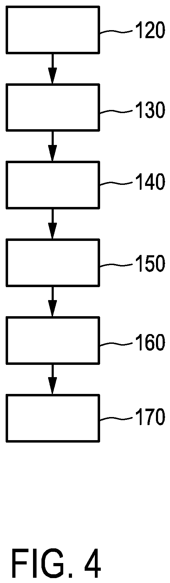

Fig. 4 schematically shows a flow diagram of an embodiment of a process for defining a representation of digital objects 2 in a three-dimensional visual space 3.

In step 120 the object providing unit 20 classifies a digital object 2 which is to be represented and which is provided by an external memory, into one of several object classes and thus generates an associated object class specification, wherein the associated object class specification specifies the object class. Classification by the object providing unit 20 is based on at least one object classification criteria, in this embodiment, the type of the digital object 2. However, in other embodiments the classification may additionally or alternatively also be based on other object classification criteria, such as for example degree of interactivity, quality and/or content of the digital object 2. The classified digital object 2 will be co-provided with the associated object class specification by the object providing unit 20.

In step 130 the representation specifications providing unit 30 provides representation specifications defining how provided digital objects 2 are to be represented in the three-dimensional visual space 3 depending on the associated object class specifications.

In step 140 the representation context providing unit 40 provides a current representation context. In this embodiment the current representation context comprises the current environment of the user. However, in other embodiments the current representation context may additionally or alternatively also comprise other contexts, such as for example the current frame of mind of the user, the current context of the user and/or the current day time.

The representation specifications providing unit 30 adapts the representation specifications to the provided current representation context.

In step 150 the representation preferences providing unit 50 provides representation preferences of a user. It is possible that the representation preferences providing unit 50 provides representation preferences of the user for various representation contexts and provides those representation preferences of the user which are consistent with the current representation context. Furthermore it is possible that the representation preferences providing unit 50 provides representation preferences of several users.

The representation specifications providing unit 30 adapts the representation specifications to the provided representation preferences of the user or of said several users. In the latter case adaption will be performed depending on the consistencies or similarities of the provided representation preferences of said several users.

In step 160 the user input unit 60 enables a user to input user data. In this embodiment the user input data may comprise representation modifications and/or representation evaluations.

The representation preferences providing unit 50 identifies representation preferences of the user depending on his user input data, i.e. in this embodiment, representation modifications and/or representation evaluations which were inputted by him.

In step 170 the representation generation unit 70 generates a representation of the provided digital object 2 in the three-dimensional visual space 3 according to the associated object class specification and the provided representation specifications. In this embodiment the representation generation unit 70 generates a stereoscopic representation of the provided digital object 2. However, in other embodiments the representation generation unit 70 may additionally or alternatively also generate other representations, e.g. a holographic representation or a spatial audio representation of the digital object 2.

In this embodiment the step of generating representation of the provided digital object 2 in the three-dimensional visual space 3 by the representation generation unit 70 solely comprises generation of an appropriate display signal. In this embodiment the generated display signal may be supplied to an external display device 80 for spatial display. However, in other embodiments the step of spatial display may be included in the process, e.g. may be part of step 170.

The steps mentioned above will not necessarily be performed in the order as set forth and the process does not stringently comprise each one of these steps.

For example input of a representation modification by the user in step 160 will preferably result in that the representation preferences providing unit 50 will specify or update, respectively, the representation preferences of the user depending on the representation modifications inputted by him. The representation preferences of the user thus specified will subsequently be provided by a representation preferences providing unit 50 and the representation specifications providing unit 30 will adapt the representation specifications to the provided representation preferences of the user (step 150) and will then provide the result (step 130). The representation generation unit 70 then generates a representation of the provided digital object 2 in the three-dimensional visual space 3 according to the associated object class specification and the provided representation specifications (step 170).

While in the embodiments disclosed above the digital objects 2 which are to be represented are being supplied to the object providing unit 20 in memory 10 these may also be supplied via an appropriate wireless or wire-bound communication system.

In case that the digital objects 2 which are to be represented are being supplied to the object providing unit 20 in an already classified state and already provided with the associated object class specifications the object providing unit 20 does not need to be adapted for classifying a digital object 2 into one or more object classes and for generating the associated object class specifications. In this case there is no need to perform the respective (partial) steps in the process.

In the embodiments set forth above the representation preferences providing unit 50 is adapted for enabling users to supply their representation preferences to other users. In other embodiments the representation preferences providing unit 50 additionally or alternatively may also be adapted for enabling users to supply representation evaluations, e.g. which they have inputted via the user input unit 60 to other users. Both the representation preferences and the representation evaluations may be supplied to other users, preferably in an anonymized form, i.e. without enabling tracing the user.

The device 1 disclosed in the embodiments set forth above for defining a representation of digital objects 2 in a three-dimensional visual space 3 comprises preferred means enabling specification of those users who are currently making use of device 1. These means may for example be suitable input means, such as for example a mouse, a key board, a touch screen, or a finger print scanner, by way of which one or more users may "explicitly" i.e. actively, sign into device 1. However, appropriate sensors may also be provided, e.g. visual and/or acoustic sensors, which for example. by way of face and/or voice recognition may automatically or semi-automatically specify one or more users.

The device 1 may for example be realized by way of an appropriate computing device, e.g. an appropriately adapted computer, or an appropriate mobile or stationary multimedia device, e.g. a tv set, an appropriate smartphone, or an appropriate digital receiver ("set-top box") or audiovisual media player and/or recorder and any other entertainment electronic apparatus able to generate a video signal comprising an OSD visualization according to the invention.

In the appended claims the expressions "have" and "comprise" are not intended to exclude other elements or steps and the indefinite article "a" does not exclude the plural.

A single unit or device may perform the functions of several components which are disclosed in the claims. For example functions of the representation preferences providing unit 50 may also be performed by the representation specifications providing unit 30.

The fact that single functions and/or components are disclosed in different dependent claims does not mean that a combination of these functions and/or components might not suitably be used as well.

A computer program may be stored/distributed on an appropriate media, such as for example an optical storage media or a hard disc media. It may as well be distributed together with or as a part of a hardware, or still in another form, for example via internet or via other wireless or wire-bound communication systems.

The reference numbers in the appended claims are not intended to limit the object and the scope of the claims.

## Claims

1. A process for arranging a digital object (2) that is part of an On Screen Display, OSD, visualization, in a three-dimensional visual space (3) which is to be presented to a viewer by a display unit of an electronic entertainment device (1), the process comprising the following steps:
- providing (120) the digital object (2) and an associated object class specification, wherein the digital object (2) relates to OSD parameters of the display unit and is classified into one of several object classes which is specified by said associated object class specification;
- providing (130) a representation specification defining how the provided digital object (2) is to be arranged in the three-dimensional visual space (3) depending on the associated object class specification, by defining a position and /or orientation of the digital object (2) in the three-dimensional visual space;
wherein the provided digital object (2) is a bi- or three-dimensional object associated to a working condition of said electronic entertainment device (1) and/or the regulation describing the designated representation of the provided digital objects.

2. An electronic entertainment device (1) with a display unit for presenting digital objects (2), the electronic entertainment device (1) further comprising:
- an object providing unit (20) for providing a digital object (2) and an associated object class specification, wherein the provided digital object (2) relates to On Screen Display, OSD, parameters of the display unit and is classified into one of several object classes which is specified by said associated object class specification;
- a representation specifications providing unit (30) for providing a representation specification defining how the provided digital object (2) is to be arranged in a three-dimensional visual space (3) displayed by the display unit, depending on the associated object class specification, by defining a position and/or orientation of the digital object (2) in the three-dimensional visual space;
wherein the digital object (2), being a bi- or three-dimensional object, is part of an OSD visualization of the electronic entertainment device and associated to a working condition of said electronic entertainment device (1) and/or the regulation describing the designated representation of the provided digital objects.

3. The electronic entertainment device (1) according to claim 2, further comprising:
a representation context providing unit (40) for providing a current representation context, wherein the representation specifications providing unit (30) is adapted for adapting the representation specification to the provided current representation context, or wherein the representation specifications providing unit (30) is able to adapt the representation specification to the provided current representation context.

4. The electronic entertainment device (1) according to claim 3, wherein the current representation context comprises at least one context selected from the group consisting of the current environment of the user, or current context of the user and current time of day.

5. The electronic entertainment device (1) according to claim 3 or 4, further comprising:
a user input unit (60) for inputting user input data by a user, wherein the user input data may comprise representation modifications and/or representation evaluations; and
a representation preferences providing unit (50), wherein the representation preferences providing unit (50) is adapted for defining the representation preferences of the user depending on his user input data, or for defining the representation preferences of the user depending on the representation modifications and/or representation evaluations inputted by the user.

6. The electronic entertainment device (1) according to claim 5, wherein the representation preferences providing unit (50) is adapted for providing the representation preferences of the user for several representation contexts, and for providing those representation preferences of the user which correspond to the current representation context, or wherein the representation preferences providing unit (50) is adapted for providing representation preferences of several users, the representation specifications providing unit (30) being adapted for adapting the representation specification to the provided representation preferences of said several users, the adaption being performed depending on consistencies or similarities of the provided representation preferences of said several users.

7. The electronic entertainment device (1) according to claim 6, wherein the representation preferences providing unit (50) is adapted for enabling the users to make their representation preferences available to other users.

8. The electronic entertainment device (1) according to any one of the claims 2 to 7, further comprising:
a representation generation unit (70) for generating a representation of the provided digital object (2) in the three-dimensional visual space (3) according to the associated object class specification and the provided representation specification.

9. The electronic entertainment device (1) according to claim 8, wherein the representation generation unit (70) is adapted for generating at least one representation selected from the group consisting of stereoscopic representation, holographic representation and spatial audio representation of the provided digital object (2).

## Patentansprüche

1. Verfahren zum Anordnen eines digitalen Objekts (2), das Teil einer On-Screen-Display (OSD)-Visualisierung ist, in einem dreidimensionalen visuellen Raum (3), der einem Betrachter durch eine Anzeigeeinheit einer elektronischen Unterhaltungsvorrichtung (1) präsentiert werden soll, wobei das Verfahren die folgenden Schritte umfasst:
- Bereitstellen (120) des digitalen Objekts (2) und einer zugehörigen Objektklassenspezifikation, wobei sich das digitale Objekt (2) auf OSD-Parameter der Anzeigeeinheit bezieht und in eine von mehreren Objektklassen klassifiziert wird, die durch die zugehörige Objektklassenspezifikation spezifiziert ist;
- Bereitstellen (130) einer Darstellungsspezifikation, die definiert, wie das bereitgestellte digitale Objekt (2) in Abhängigkeit von der zugehörigen Objektklassenspezifikation in dem dreidimensionalen visuellen Raum (3) anzuordnen ist, indem eine Position und/oder Orientierung des digitalen Objekts (2) in dem dreidimensionalen visuellen Raum definiert wird;
wobei das bereitgestellte digitale Objekt (2) ein zwei-oder dreidimensionales Objekt ist, das einem Betriebszustand der elektronischen Unterhaltungsvorrichtung (1) und/oder der Vorschrift, welche die bezeichnete Darstellung der bereitgestellten digitalen Objekte beschreibt, zugeordnet ist.

2. Elektronische Unterhaltungsvorrichtung (1) mit einer Anzeigeeinheit zum Präsentieren digitaler Objekte (2), wobei die elektronische Unterhaltungsvorrichtung (1) des Weiteren umfasst:
- eine Objektbereitstellungseinheit (20) zum Bereitstellen eines digitalen Objekts (2) und einer zugehörigen Objektklassenspezifikation, wobei sich das bereitgestellte digitale Objekt (2) auf On-Screen-Display (OSD)-Parameter der Anzeigeeinheit bezieht und in eine von mehreren Objektklassen klassifiziert wird, die durch die zugehörige Objektklassenspezifikation spezifiziert ist;
- eine Darstellungsspezifikationen-Bereitstellungseinheit (30) zum Bereitstellen einer Darstellungsspezifikation, die definiert, wie das bereitgestellte digitale Objekt (2) in Abhängigkeit von der zugehörigen Objektklassenspezifikation in dem durch die Anzeigeeinheit angezeigten dreidimensionalen visuellen Raum (3) anzuordnen ist, indem eine Position und/oder Orientierung des digitalen Objekts (2) in dem dreidimensionalen visuellen Raum definiert wird;
wobei das digitale Objekt (2), das ein zwei- oder dreidimensionales Objekt ist, Teil einer OSD-Visualisierung der elektronischen Unterhaltungsvorrichtung ist und einem Betriebszustand der elektronischen Unterhaltungsvorrichtung (1) und/oder der Vorschrift, welche die bezeichnete Darstellung der bereitgestellten digitalen Objekte beschreibt, zugeordnet ist.

3. Elektronische Unterhaltungsvorrichtung (1) nach Anspruch 2, des Weiteren umfassend:
eine Darstellungskontext-Bereitstellungseinheit (40) zum Bereitstellen eines momentanen Darstellungskontextes, wobei die Darstellungsspezifikationen-Bereitstellungseinheit (30) dafür ausgelegt ist, die Darstellungsspezifikation an den bereitgestellten momentanen Darstellungskontext anzupassen, oder wobei die Darstellungsspezifikationen-Bereitstellungseinheit (30) in der Lage ist, die Darstellungsspezifikation an den bereitgestellten momentanen Darstellungskontext anzupassen.

4. Elektronische Unterhaltungsvorrichtung (1) nach Anspruch 3, wobei der momentane Darstellungskontext mindestens einen Kontext umfasst, der aus der Gruppe ausgewählt ist, die aus der momentanen Umgebung des Benutzers und dem momentanen Kontext des Benutzers und der momentanen Tageszeit besteht.

5. Elektronische Unterhaltungsvorrichtung (1) nach Anspruch 3 oder 4, des Weiteren umfassend:
eine Benutzereingabeeinheit (60) zum Eingeben von Benutzereingabedaten durch einen Benutzer, wobei die Benutzereingabedaten Darstellungsmodifikationen und/oder Darstellungsauswertungen umfassen können; und
eine Darstellungspräferenzen-Bereitstellungseinheit (50), wobei die Darstellungspräferenzen-Bereitstellungseinheit (50) dafür ausgelegt ist, die Darstellungspräferenzen des Benutzers in Abhängigkeit von seinen Benutzereingabedaten zu definieren oder die Darstellungspräferenzen des Benutzers in Abhängigkeit von den durch den Benutzer eingegebenen Darstellungsmodifikationen und/oder Darstellungsauswertungen zu definieren.

6. Elektronische Unterhaltungsvorrichtung (1) nach Anspruch 5, wobei die Darstellungspräferenzen-Bereitstellungseinheit (50) dafür ausgelegt ist, die Darstellungspräferenzen des Benutzers für mehrere Darstellungskontexte bereitzustellen und jene Darstellungspräferenzen des Benutzers, die dem momentanen Darstellungskontext entsprechen, bereitzustellen, oder wobei die Darstellungspräferenzen-Bereitstellungseinheit (50) dafür ausgelegt ist, Darstellungspräferenzen mehrerer Benutzer bereitzustellen, wobei die Darstellungsspezifikationen-Bereitstellungseinheit (30) dafür ausgelegt ist, die Darstellungsspezifikation an die bereitgestellten Darstellungspräferenzen der mehreren Benutzer anzupassen, wobei die Anpassung in Abhängigkeit von Übereinstimmungen oder Ähnlichkeiten der bereitgestellten Darstellungspräferenzen der mehreren Benutzer durchgeführt wird.

7. Elektronische Unterhaltungsvorrichtung (1) nach Anspruch 6, wobei die Darstellungspräferenzen-Bereitstellungseinheit (50) dafür ausgelegt ist, es den Benutzern zu ermöglichen, ihre Darstellungspräferenzen anderen Benutzern zur Verfügung zu stellen.

8. Elektronische Unterhaltungsvorrichtung (1) nach einem der Ansprüche 2 bis 7, des Weiteren umfassend:
eine Darstellungsgenerierungseinheit (70) zum Generieren einer Darstellung des bereitgestellten digitalen Objekts (2) in dem dreidimensionalen visuellen Raum (3) gemäß der zugehörigen Objektklassenspezifikation und der bereitgestellten Darstellungsspezifikation.

9. Elektronische Unterhaltungsvorrichtung (1) nach Anspruch 8, wobei die Darstellungsgenerierungseinheit (70) dafür ausgelegt ist, mindestens eine Darstellung zu generieren, die aus der Gruppe ausgewählt ist, die aus stereoskopischer Darstellung, holographischer Darstellung und räumlicher Audiodarstellung des bereitgestellten digitalen Objekts (2) besteht.

## Revendications

1. Procédé permettant de disposer un objet numérique (2) qui fait partie d'une visualisation par affichage à l'écran, OSD (*on screen display*), dans un espace visuel tridimensionnel (3) qui doit être présenté à un spectateur par une unité d'affichage de dispositif électronique de divertissement (1), le procédé comprenant les étapes suivantes :
- fournir (120) l'objet numérique (2) et une spécification de classe d'objets associée, dans lequel l'objet numérique (2) se rapporte à des paramètres OSD de l'unité d'affichage et se range dans l'une de plusieurs classes d'objets, qui est spécifiée par ladite spécification de classe d'objets associée ;
- fournir (130) une spécification de représentation définissant comment l'objet numérique fourni (2) doit être disposé dans l'espace visuel tridimensionnel (3) en fonction de la spécification de classe d'objets associée, en définissant une position et/ou une orientation de l'objet numérique (2) dans l'espace visuel tridimensionnel ;
dans lequel l'objet numérique fourni (2) est un objet bidimensionnel ou tridimensionnel associé à une condition de fonctionnement dudit dispositif électronique de divertissement (1) et/ou au règlement décrivant la représentation désignée des objets numériques fournis.

2. Dispositif électronique de divertissement (1) doté d'une unité d'affichage destinée à présenter des objets numériques (2), le dispositif électronique de divertissement (1) comprenant en outre :
- une unité de fourniture d'objet (20) destinée à fournir un objet numérique (2) et une spécification de classe d'objets associée, dans lequel l'objet numérique fourni (2) se rapporte à des paramètres d'affichage à l'écran, OSD, de l'unité d'affichage et se range dans l'une de plusieurs classes d'objets, qui est spécifiée par ladite spécification de classe d'objets associée ;
- une unité de fourniture de spécification de représentation (30) destinée à fournir une spécification de représentation définissant comment l'objet numérique fourni (2) doit être disposé dans un espace visuel tridimensionnel (3) affiché par l'unité d'affichage, en fonction de la spécification de classe d'objets associée, en définissant une position et/ou une orientation de l'objet numérique (2) dans l'espace visuel tridimensionnel ;
dans lequel l'objet numérique (2), qui est un objet bidimensionnel ou tridimensionnel, fait partie d'une visualisation OSD du dispositif électronique de divertissement et est associé à une condition de fonctionnement dudit dispositif électronique de divertissement (1) et/ou au règlement décrivant la représentation désignée des objets numériques fournis.

3. Dispositif électronique de divertissement (1) selon la revendication 2, comprenant en outre :
une unité de fourniture de contexte de représentation (40) destinée à fournir un contexte actuel de représentation, dans lequel l'unité de fourniture de spécification de représentation (30) est conçue pour adapter la spécification de représentation au contexte actuel de représentation fourni, ou dans lequel l'unité de fourniture de spécification de représentation (30) est apte à adapter la spécification de représentation au contexte actuel de représentation fourni.

4. Dispositif électronique de divertissement (1) selon la revendication 3, dans lequel le contexte actuel de représentation comprend au moins un contexte choisi dans le groupe composé de l'environnement actuel de l'utilisateur ou du contexte actuel de l'utilisateur et de l'heure actuelle.

5. Dispositif électronique de divertissement (1) selon la revendication 3 ou 4, comprenant en outre :
une unité d'entrée d'utilisateur (60) permettant à un utilisateur d'introduire des données d'entrée d'utilisateur, dans lequel les données d'entrée d'utilisateur comprennent des modifications de représentation et/ou des évaluations de représentation ; et
une unité de fourniture de préférences de représentation (50), dans lequel l'unité de fourniture de préférences de représentation (50) est conçue pour définir les préférences de représentation de l'utilisateur en fonction de ses données d'entrée d'utilisateur, ou pour définir les préférences de représentation de l'utilisateur en fonction des modifications de représentation et/ou des évaluations de représentation introduites par l'utilisateur.

6. Dispositif électronique de divertissement (1) selon la revendication 5, dans lequel l'unité de fourniture de préférences de représentation (50) est conçue pour fournir les préférences de représentation de l'utilisateur pour plusieurs contextes de représentation, et pour fournir celles des préférences de représentation de l'utilisateur qui correspondent au contexte actuel de représentation, ou dans lequel l'unité de fourniture de préférences de représentation (50) est conçue pour fournir les préférences de représentation de plusieurs utilisateurs, l'unité de fourniture de spécification de représentation (30) étant conçue pour adapter la spécification de représentation aux préférences de représentation fournies desdits plusieurs utilisateurs, l'adaptation étant réalisée en fonction de la cohérence ou des similitudes des préférences de représentation fournies desdits plusieurs utilisateurs.

7. Dispositif électronique de divertissement (1) selon la revendication 6, dans lequel l'unité de fourniture de préférences de représentation (50) est conçue pour permettre aux utilisateurs de mettre leurs préférences de représentation à la disposition d'autres utilisateurs.

8. Dispositif électronique de divertissement (1) selon l'une quelconque des revendications 2 à 7, comprenant en outre :
une unité de génération de représentation (70) destinée à engendrer une représentation de l'objet numérique fourni (2) dans l'espace visuel tridimensionnel (3) selon la spécification de classe d'objets associée et la spécification de représentation fournie.

9. Dispositif électronique de divertissement (1) selon la revendication 8, dans lequel l'unité de génération de représentation (70) est conçue pour engendrer au moins une représentation choisie dans le groupe composé d'une représentation stéréoscopique, d'une représentation holographique et d'une représentation audio spatiale de l'objet numérique fourni (2).
